# FASCICULE DE BREVET EUROPEEN

(11) **EP 3 630 324 B1**
(45) Date de publication et mention de la délivrance du brevet: **30.03.2022**
(21) Numéro de dépôt: 18727245.5
(22) Date de dépôt: 22.05.2018
(51) Int. Cl.: B01D 11/02

(54) **PROCÉDÉ ET DISPOSITIF D'EXTRACTION SOLIDE/LIQUIDE À CONTRE-COURANT COMPORTANT UNE ÉTAPE DE SÉCHAGE**
VERFAHREN UND VORRICHTUNG ZUR GEGENSTROM-FEST/FLÜSSIG-EXTRAKTION MIT TROCKNUNGSSCHRITT
PROCESS AND DEVICE FOR COUNTER-CURRENT SOLID/LIQUID EXTRACTION COMPRISING A DRYING STEP

(30) Priorité: 24.05.2017 FR 1754638
(43) Date de publication de la demande: 08.04.2020
(73) Titulaire: ERPIM, 13120 Gardanne (FR)
(72) Inventeur: BARBIER, François, 13012 Marseille (FR)
(74) Mandataire: Ipside
(86) Numéro de dépôt international: PCT/EP2018/063353
(87) Numéro de publication internationale: WO 2018/215444

(56) Documents cités:
- EP-A1- 1 491 245
- EP-A1- 2 522 409
- WO-A1-94/26853
- WO-A1-2013/142694

## Description

### DOMAINE TECHNIQUE DE L'INVENTION

La présente invention concerne un procédé perfectionné d'extraction solide-liquide à contre courant. L'invention est plus particulièrement, mais non exclusivement, destinée à l'extraction d'un actif d'un produit, tel qu'une substance odorante, colorante, médicinale ou cosmétique d'un produit, plus particulièrement un produit végétal.

### ETAT DE LA TECHNIQUE

L'extraction solide-liquide est l'opération fondamentale qui a pour but d'extraire, de séparer, de dissoudre soit par immersion soit par percolation d'un liquide, un ou plusieurs composants, liquide ou solide, mélangés à un solide.

On peut réaliser une extraction à étage unique ou à simple contact. Elle peut être discontinue, semi-continue ou continue.

Associer des étages d'extraction permet d'obtenir une efficacité plus importante. Selon le mode de contact des courants, on a l'opération à étages multiples à co-courant, ou celle à contre-courant dans laquelle le solvant est déplacé dans le sens contraire du sens de convoyage du solide.

A contre-courant, le solide à traiter est mis en contact avec la solution riche en soluté qui va quitter l'installation. Le solvant frais qui entre à l'autre extrémité lui est en contact avec le solide pauvre en soluté. Le contre-courant permet de maintenir un potentiel d'échange pratiquement constant tout le long de l'appareil et peut diminuer ainsi la quantité de solvant utilisée et en conséquence le prix de la séparation des solutés et du solvant et celui de la régénération du solvant.

Des extracteurs à contre-courants sont bien connus dans l'industrie du traitement des aliments pour l'extraction continue de liquides, matières solubles et matières particulaires fines. Des extracteurs comportant un convoyeur consistant en une ou plusieurs vis d'Archimède déplaçant le solide le long d'une auge perforée son connus, comme par exemple l'extracteur décrit dans les documents WO2013142694 ou EP 2 522 409.

Dans ce type d'extracteur le solide est continuellement alimenté en solvant durant toute la durée du procédé biologique. Le solide à traiter est continuellement imbibée car il est mis en contact avec du solvant neuf ou re-circulé au sein de l'extracteur.

### OBJET DE L'INVENTION

La présente invention a pour objet un perfectionnement des extracteurs connus de l'art antérieur. La présente invention concerne un procédé d'extraction solide-liquide à contre courant.

L'invention est plus particulièrement, mais non exclusivement, destinée à l'extraction d'un actif ou plusieurs actifs. Un « actif » désigne une substance telle qu'une substance odorante, médicinale, cosmétique, colorante ou énergétique sans que cette liste ne soit exhaustive. Laquelle substance est contenue dans un produit généralement, mais non exclusivement, végétal.

Le procédé objet de l'invention se distingue tout particulièrement des procédés de l'art antérieur en ce qu'au moins deux étapes d'extraction solide/liquide utilisant deux circuits de circulation de solvant distincts sont mises en œuvre.

Le procédé objet de l'invention se distingue tout particulièrement des procédés de l'art antérieur en ce que prennent place deux étapes d'extraction solide/liquide et une étape de séchage de la matière biologique entre ces deux extractions solide/liquide.

Ainsi, un premier aspect concerne un procédé d'extraction solide/liquide de substances à partir de matière biologique, dans lequel :
- de la matière biologique est entrainée le long d'une auge perforée par une vis d'Archimède,
- la matière biologique est soumise à une première extraction solide/liquide par un solvant dont le soluté est récupéré,
- la matière biologique issue de la première extraction est séchée,
- la matière biologique séchée est soumise à une deuxième extraction solide/liquide par un deuxième solvant dont le soluté est récupéré,
et en ce que, au moins une étape d'extraction solide/liquide est une extraction solide/liquide à contre-courant.

Grâce à ces dispositions, au moins deux actifs d'intérêt peuvent être extraits successivement de la même matière biologique au cours du procédé. Par exemple en utilisant deux solvants distincts lors de la première et lors de la deuxième extraction solide/liquide. Alternativement, le même solvant peut être utilisé au cours des deux étapes d'extractions solide/liquide à des concentrations différentes ou avec des additifs différents de sorte à obtenir deux solutés distincts aux compositions souhaitées ou encore pour augmenter le rendement d'extraction d'un actif visé.

L'étape de séchage permet de récupérer tout ou partie du solvant utilisé lors de la première extraction solide/liquide.

Dans des modes de réalisation, au moins une étape de séchage et une étape d'extraction supplémentaires sont mises en œuvre. Le procédé d'extraction solide/liquide est caractérisé par une étape de bombardement de la matière biologique par des micro-ondes.

Grâce à ces dispositions, par combinaison de l'effet du solvant et des micro-ondes et des différentes moyens d'assistance à l'extraction le procédé de l'invention permet d'utiliser des solvants moins agressifs, plus respectueux de l'environnement, tout en conservant des rendements et des débits de production industrielle.

Alternativement, le procédé de l'invention peut permettre d'obtenir des rendements d'extraction plus importants en utilisant les solvants usuellement utilisés.

Le bombardement de la matière biologique par des micro-ondes est réalisé sur la matière biologique séchée, entre la première et la deuxième extraction solide/liquide.

Grâce à ces dispositions, l'humidité de la matière biologique peut être contrôlée de sorte à optimiser l'effet du bombardement de la matière biologique par des micro-ondes.

Dans des modes de réalisation, au moins une partie de la vis exposée à un bombardement par des micro-ondes est en matière plastique.

Grâce à ces dispositions, la partie de la vis d'Archimède exposée aux micro-ondes ne réagis aux micro-ondes, préservant ainsi les hommes et le matériels des dangers associés à l'irradiation d'une pièce métallique par des micro-ondes.

Dans des modes de réalisation, le procédé d'extraction solide/liquide comporte en outre une étape de vibration par des ultrasons.

Grâce à ces dispositions, une ou plusieurs sonotrodes permettent de soumettre le contenu de la cuve à des vibrations ultrasonores, et ajouter un effet de sonication au processus d'extraction combinée par le solvant et les micro-ondes. L'effet de sonication, seul ou en combinaison avec d'autres effets permet d'obtenir des rendements plus importants sur certains types d'extractions. Un deuxième aspect concerne un dispositif pour la mise en œuvre du procédé d'extraction solide/liquide qui comporte une auge perforée configurée pour contenir la matière biologique, une vis d'Archimède, montée dans l'auge, dont la rotation déplace la matière biologique le long de l'auge, un premier circuit de solvant configuré pour amener un premier solvant en contact avec la matière organique et pour récupérer un premier soluté, des moyens de séchage de la matière biologique, et un deuxième circuit de solvant configuré pour amener un deuxième solvant en contact avec la matière organique séchée et récupérer un deuxième soluté.

Les avantages, buts et caractéristiques du dispositif d'extraction objet de l'invention étant similaire au procédé d'extraction solide/liquide objet de l'invention ils ne sont pas rappelés ici.

Le dispositif pour la mise en œuvre du procédé d'extraction solide/liquide est plus communément appelé « extracteur ».

Dans des modes de réalisation, l'auge perforée et la vis d'Archimède sont changeables de sorte à pouvoir accommoder des vis de différents diamètres. Le dispositif pour la mise en œuvre du procédé d'extraction solide/liquide est caractérisé par des moyens pour soumettre la matière biologique à un bombardement par des micro-ondes, y compris un magnétron et un guide d'onde.

Dans des modes de réalisation, le dispositif pour la mise en œuvre du procédé d'extraction solide/liquide comporte en outre des moyens pour soumettre la matière biologique à une vibration ultrasonore, y compris une sonotrode.

### PRESENTATION DES FIGURES

D'autres avantages, buts et caractéristiques particuliers de la présente invention ressortiront de la description non limitative qui suit d'au moins un mode de réalisation particulier des dispositifs, procédés et systèmes objets de la présente invention, en regard des dessins annexés, dans lesquels :
- la figure 1 représente, schématiquement et en vue de coté, un mode de réalisation particulier du dispositif pour la mise en œuvre du procédé d'extraction solide/liquide selon l'invention,
- la figure 2 représente, sous forme de logigramme, un mode de réalisation particulier du procédé d'extraction selon l'invention.

### DESCRIPTION DETAILLEE DE L'INVENTION

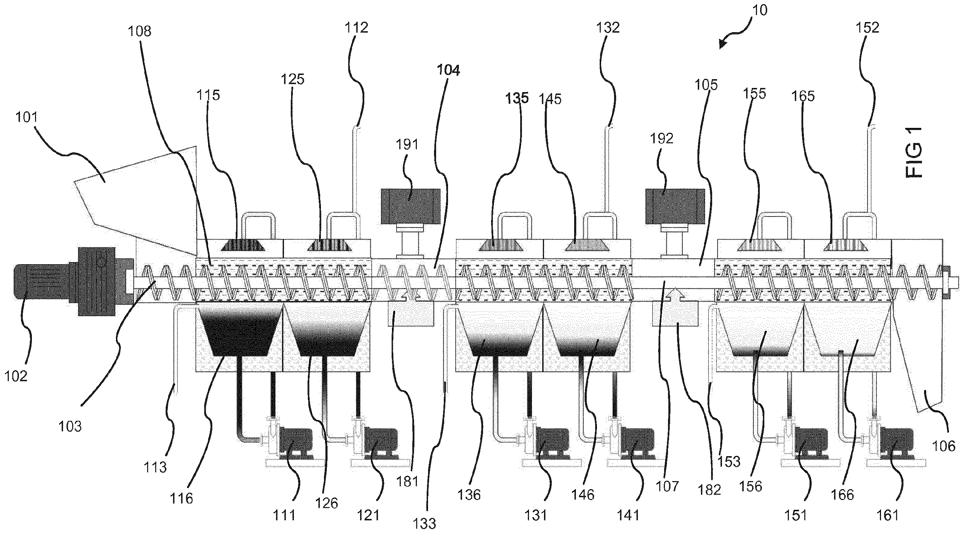

On note, dès à présent, que la figure 1 n'est pas à l'échelle.

La figure 1 montre un dispositif 10 pour la mise en œuvre d'un procédé d'extraction solide/liquide à partir de matière biologique, aussi appelé extracteur.

Le dispositif 10 comporte une auge 108, dont le profil est en forme de U ou de O, perforée au moins sur sa partie inférieure. Les perforations de l'auge 108 sont dimensionnées pour permettre l'écoulement d'un liquide sans permettre le passage de la matière biologique.

L'auge 108 peut être d'un seul tenant ou être formée par plusieurs auges de plus petite taille. Une vis d'Archimède 103 est montée dans l'auge 108, un moteur 102 permet la mise en rotation de la vis d'Archimède 104.

Lors de la mise en opération de l'extracteur un opérateur ou des moyens mécaniques déversent de la matière biologique dans une trémie 101. Par rotation, la vis d'Archimède fait progresser la matière biologique le long de l'auge 108. En bout d'extracteur la matière biologique tombe dans une chute 106. En faisant varier la vitesse de rotation de la vis d'Archimède l'opérateur peut régler le temps de séjour dans l'extracteur. A titre d'exemple la vitesse de rotation peut être réglée entre 0,1 rpm et 1 rpm.

Dans des modes de réalisation, l'auge perforée et la vis d'Archimède sont changeables de sorte à pouvoir accommoder des vis de différents diamètres. A titre d'exemples des vis de 50, 80 ou 100 millimètres de diamètres peuvent être utilisées en fonction des conditions opératoires.

Un premier circuit de solvant est configuré pour amener un premier solvant en contact avec la matière organique et pour récupérer un premier soluté. Le premier circuit de solvant comporte deux bacs de rétention 116 et 126, deux pompes 111 et 121 et deux buses de distribution de solvant 115 et 125.

Un tuyau relie le bac de rétention 116 à la buse de distribution 115, le solvant convoyé dans ce tuyau est propulsé par la pompe 111. De même, un tuyau relie le bac de rétention 126 à la buse de distribution 125, le solvant convoyé dans ce tuyau est mis en mouvement par la pompe 121. Les bacs 116 et 126 sont inclinés de sorte que le trop-plein de solvant du bac 126 déborde dans le bac 116. Dans des modes de réalisation la pompe est une pompe centrifuge.

Un tuyau d'alimentation 112 alimente le premier circuit de solvant en solvant neuf. Un tuyau de récupération 113 connecté au bac 116 récupère le trop-plein du bac 116. Le trop-plein récupéré est un soluté riche en actif d'intérêt.

Le circuit de solvant permet de mettre en contact la matière biologique à traiter avec du solvant en vue d'extraire les actifs d'intérêt par percolation. Le soluté collecté par gravité dans les bacs de rétention est re-circulé sur la matière biologique en continu. Le débit de recirculation est réglé par l'opérateur en fonction des conditions opératoire souhaitées. Préférentiellement, ces paramètres ainsi que les autres paramètres opératoires sont contrôlés par ordinateur.

Un deuxième circuit de circulation de solvant comporte deux bacs de rétention 136 et 146, deux pompes 131 et 141, deux buses de distribution de solvant 135 et 145, une arrivée de solvant neuf 132 et un tuyau de récupération 133. Un troisième circuit de circulation de solvant comporte deux bacs de rétention 156 et 166, deux pompes 151 et 161, deux buses de distribution de solvant 155 et 165, une arrivée de solvant neuf 152 et un tuyau de récupération 153. Les configurations du deuxième circuit de circulation de solvant et celle du troisième circuit de circulation de solvant étant similaires à celles du premier circuit de circulation de solvant elles ne sont pas rappelées ici.

La mise en place de plusieurs circuits de solvant permet la mise en œuvre de plusieurs extractions par des solvants différents en vue d'extraire sélectivement plusieurs actifs.

Le dispositif 10 pour la mise en œuvre d'un procédé d'extraction solide/liquide comporte en outre des moyens de séchage de la matière biologique.

Dans des modes de réalisation, une zone de séchage 104 est intercalée deux étape d'extraction. Dans cette zone de séchage une partie du solvant imbibant la matière organique s'écoule par gravité vers le bas de la zone de séchage 104. Le plan formant le fond de la zone de séchage 104 est incliné de sorte que le solvant s'écoule vers le bac de rétention 126.

Dans des modes de réalisation, une zone de séchage 105 est intercalée entre deux étapes d'extraction. Dans la zone de séchage 105 l'hélice de la vis d'Archimède est absente de sorte que seul l'arbre de transmission 107 est présent. Dans la zone de séchage 105 la matière biologique s'accumule et se comprime sur elle-même de sorte qu'une partie du solvant imbibant la matière organique est pressée et s'écoule par gravité vers le bas de la zone de séchage 105. Le plan formant le fond de la zone de séchage 105 est incliné de sorte que le solvant s'écoule vers le bac de rétention 146.

Dans des modes de réalisation (non représentés) une presse comprime la matière biologique au niveau d'une zone de séchage de sorte qu'une partie du solvant imbibant la matière organique est pressée et s'écoule par gravité vers le bas de la zone de séchage.

Le dispositif pour la mise en œuvre du procédé d'extraction solide/liquide comporte en outre des moyens 191, 192 pour soumettre la matière biologique à un bombardement par des micro-ondes. Les moyens 191, 192 pour soumettre la matière biologique à un bombardement par des micro-ondes comportent au moins un magnétron et un guide d'onde.

Le magnétron est apte à générer des micro-ondes. A titre d'exemples des micro-ondes peuvent être générés à une fréquence de l'ordre de 2,4 Ghz, préférentiellement de l'ordre de 915 Mhz pour des puissances supérieures à 10 KW. Pare exemple pour des puissances entre 10KW et 75 KW. Alternativement, d'autres fréquences son utilisables, selon la nature du produit traité.

Le guide d'onde permet de concentrer l'action des micro-ondes sur la zone souhaitée.

Dans des modes de réalisation les moyens 191, 192 pour soumettre la matière biologique à un bombardement par des micro-ondes sont positionnés au niveau de la zone de séchages. Le taux d'humidité de la matière biologique peut ainsi être maitrisée afin d'optimiser l'étape de bombardement par des micro-ondes.

Par combinaison de l'effet de du solvant et des micro-ondes et des différentes assistances à l'extraction le procédé de l'invention permet d'utiliser des solvants moins agressifs, plus respectueux de l'environnement, tout en conservant des rendements et des débits de production industrielle.

Dans des modes de réalisation, le dispositif pour la mise en œuvre du procédé d'extraction solide/liquide comporte en outre des moyens 181, 182 pour soumettre la matière biologique à une vibration ultrasonore.

Les moyens 181, 182 pour soumettre la matière biologique à une vibration ultrasonore comporte au moins une sonotrode.

Ainsi, l'action mécanique des ondes ultrasonores est combinée aux autres effets des mirco-ondes et du solvant pour parfaire le rendement d'extraction de l'actif.

Avantageusement, la température et la pression au sein de l'extracteur sont également régulées pour parfaire le rendement d'extraction de l'actif.

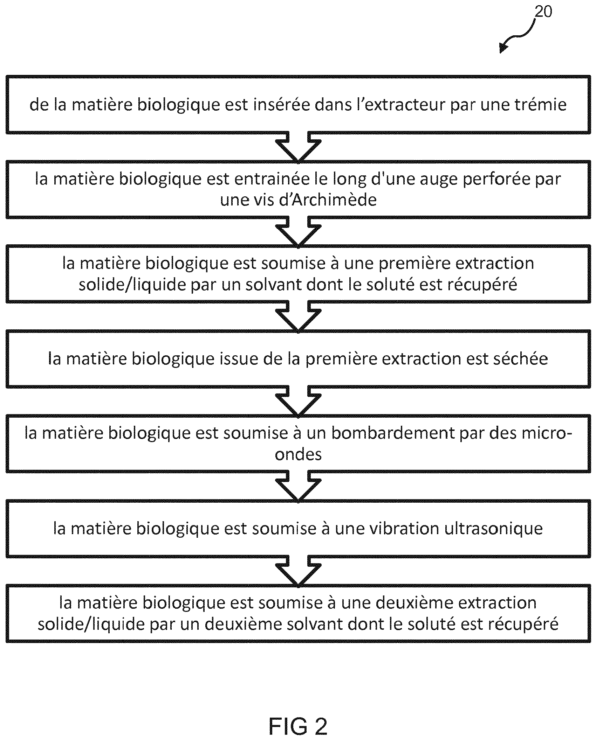

On observe en figure 2, une illustration sous forme de logigramme du procédé 20 d'extraction solide/liquide à contre-courant de substances à partir de matière biologique. Ledit procédé comporte les étapes suivantes :
- de la matière biologique est entrainée le long d'une auge perforée par une vis d'Archimède,
- la matière biologique est soumise à une première extraction solide/liquide par un solvant dont le soluté est récupéré,
- la matière biologique issue de la première extraction est séchée,
- la matière biologique séchée est soumise à un bombardement par des micro-ondes,
- la matière biologique est soumise à une vibration ultrasonique, et
- la matière biologique séchée est soumise à une deuxième extraction solide/liquide par un deuxième solvant dont le soluté est récupéré.

Les avantages, but et caractéristiques du procédé d'extraction solide/liquide à contre-courant de substances à partir de matière biologique étant similaire à ceux du dispositif d'extraction ils ne sont pas rappelés ici.

## Revendications

1. **Procédé** 20 d'extraction solide/liquide de substances à partir de matière biologique, dans lequel :
- de la matière biologique est entrainée le long d'une auge (108) perforée par une vis d'Archimède (103),
- la matière biologique est soumise à une première extraction solide/liquide par un solvant dont le soluté est récupéré,
- la matière biologique issue de la première extraction est séchée,
- la matière biologique séchée est soumise à une deuxième extraction solide/liquide par un deuxième solvant dont le soluté est récupéré,
- et en ce que, au moins une étape d'extraction solide/liquide est une extraction solide/liquide à contre-courant,
- **caractérisé en ce que** :
- la matière biologique séchée est bombardée par des micro-ondes,
- et **en ce que** le bombardement de la matière biologique par des micro-ondes est réalisé sur la matière biologique séchée, entre la première et la deuxième extraction solide/liquide.

2. Procédé d'extraction solide/liquide selon la revendication 1, dans lequel au moins une partie de la vis exposée à un bombardement par des micro-ondes est en matière plastique.

3. Procédé d'extraction solide/liquide selon l'une des revendications 1 à 2 qui comporte en outre une étape de mise en vibration de la matière biologique par des ultrasons.

4. Dispositif 10 pour la mise en œuvre du procédé d'extraction solide/liquide selon l'une des revendication 1 à 3 comportant une auge perforée (108) configurée pour contenir la matière biologique, une vis d'Archimède (103), montée dans l'auge (108), dont la rotation déplace la matière biologique le long de l'auge (108), un premier circuit de solvant configuré pour amener un premier solvant en contact avec la matière organique et pour récupérer un premier soluté, des moyens de séchage de la matière biologique, des moyens (191, 192) pour soumettre la matière biologique séchée à un bombardement par des micro-ondes et un deuxième circuit de solvant configuré pour amener un deuxième solvant en contact avec la matière organique séchée et récupérer un deuxième soluté, **caractérisé en ce que** le bombardement de la matière biologique par des micro-ondes est réalisé sur la matière biologique séchée, entre la première et la deuxième extraction solide/liquide.

5. Dispositif selon la revendication 4 dans lequel l'auge perforée et la vis d'Archimède sont changeables de sorte à pouvoir accommoder des vis de différents diamètres.

6. Dispositif selon l'une des revendications 4 ou 5, dans lesquels les moyens (191, 192) pour soumettre la matière biologique à un bombardement par des micro-ondes comportent un magnétron et un guide d'onde.

7. Dispositif selon l'une des revendications 4 à 6 qui comporte en outre des moyens (181, 182) pour soumettre la matière biologique à une vibration ultrasonore, dont une sonotrode.

## Patentansprüche

1. **Verfahren** 20 zur Fest-/Flüssig-Extraktion von Stoffen aus biologischem Material, wobei:
- biologisches Material von einer archimedischen Schraube (103) einem perforierten Trog (108) entlang befördert wird,
- das biologische Material einer ersten Fest-/Flüssig-Extraktion mit einem Lösungsmittel unterzogen wird, aus der das Solvat aufgefangen wird,
- das aus der ersten Extraktion hervorgegangene biologische Material getrocknet wird,
- das getrocknete biologische Material einer zweiten Fest-/ Flüssig-Extraktion mit einem zweiten Lösungsmittel unterzogen wird, aus der das Solvat aufgefangen wird,
- und dadurch, dass es sich bei mindestens einem Schritt der Fest-/Flüssig-Extraktion um eine Gegenstrom-Fest-/Flüssig-Extraktion handelt,
- **dadurch gekennzeichnet, dass**:
- das getrocknete biologische Material mit Mikrowellen beschossen wird,
- und dadurch, dass der Beschuss des biologischen Materials mit Mikrowellen zwischen der ersten und der zweiten Fest-/ Flüssig-Extraktion am getrockneten biologischen Material erfolgt.

2. Verfahren zur Fest-/Flüssig-Extraktion nach Anspruch 1, wobei mindestens ein Teil der Schraube, der einem Beschuss mit Mikrowellen ausgesetzt ist, aus Kunststoffmaterial besteht.

3. Verfahren zur Fest-/Flüssig-Extraktion nach einem der Ansprüche 1 bis 2, das weiter einen Schritt umfasst, bei dem das biologische Material mit Ultraschall in Schwingung versetzt wird.

4. Vorrichtung 10 zur Umsetzung des Fest-/Flüssig-Extraktionsverfahrens nach einem der Ansprüche 1 bis 3, die einen perforierten Trog (108), der so ausgelegt ist, dass er das biologische Material enthalten kann, eine in dem Trog (108) angebrachte archimedische Schraube (103), deren Drehung das biologische Material den Trog (108) entlang bewegt, einen ersten Lösungsmittelkreislauf, der so ausgelegt ist, dass er ein erstes Lösungsmittel mit dem organischen Material in Kontakt bringen und ein erstes Solvat auffangen kann, Mittel zum Trocknen des biologischen Materials, Mittel (191, 192), um das getrocknete biologische Material einem Beschuss mit Mikrowellen zu unterziehen, und einen zweiten Lösungsmittelkreislauf umfasst, der so ausgelegt ist, dass er ein zweites Lösungsmittel mit dem getrockneten organischen Material in Kontakt bringen und ein zweites Solvat auffangen kann, **dadurch gekennzeichnet, dass** der Beschuss des biologischen Materials mit Mikrowellen zwischen der ersten und der zweiten Fest-/Flüssig-Extraktion am getrockneten biologischen Material erfolgt.

5. Vorrichtung nach Anspruch 4, wobei der perforierte Trog und die archimedische Schraube ausgetauscht werden können, um Schrauben mit unterschiedlichen Diametern aufnehmen zu können.

6. Vorrichtung nach einem der Ansprüche 4 oder 5, wobei die Mittel (191, 192), um das biologische Material einem Beschuss mit Mikrowellen zu unterziehen, ein Magnetron und einen Wellenleiter umfassen.

7. Vorrichtung nach einem der Ansprüche 4 bis 6, die weiter Mittel (181, 182), um das biologische Material einer Ultraschallschwingung zu unterziehen, darunter eine Sonotrode, umfasst.

## Claims

1. A **process** 20 for solid/liquid extraction of substances from biological material, **characterised in that**:
- biological material is driven along a trough (108) perforated by an Archimedean screw (103),
- the biological material is subjected to a first solid/liquid extraction by a solvent the solute of which is recovered,
- the biological material derived from the first extraction is dried,
- the dried biological material is subjected to a second solid/liquid extraction by a second solvent the solute of which is recovered,
- and **in that** at least one solid/liquid extraction step is a counter-current solid/liquid extraction,
- **characterised in that**:
- the dried biological material is bombarded with microwaves,
- and **in that** the bombardment of the biological material by microwaves is carried out on the dried biological material, between the first and second solid/liquid extractions.

2. The process for solid/liquid extraction according to claim 1, wherein at least one portion of the screw exposed to bombardment by microwaves is made of a plastic material.

3. The process for solid/liquid extraction according to one of claims 1 to 2, which also includes a step of vibrating the biological material by ultrasounds.

4. The device 10 for implementing the solid/liquid extraction process according to one of claims 1 to 3 including a perforated trough (108) configured to contain the biological material, an Archimedes screw (103), mounted in the trough (108), the rotation of which moves the biological material along the trough (108), a first solvent circuit configured to bring a first solvent into contact with the organic material and to recover a first solute, means for drying the biological material, means (191, 192) for subjecting the dried biological material to bombardment by microwaves and a second solvent circuit configured to bring a second solvent into contact with the dried organic material and recover a second solute, **characterised in that** the bombardment of the biological material by microwaves is carried out on the dried biological material, between the first and second solid/liquid extractions.

5. The device according to claim 4 wherein the perforated trough and the Archimedean screw are replaceable so as to be able to accommodate screws of different diameters.

6. The device according to one of claims 4 or 5 wherein the means (191, 192) for subjecting the biological material to bombardment by microwaves include a magnetron and a waveguide.

7. The device according to one of claims 4 to 6 which further includes means (181, 182) for subjecting the biological material to an ultrasonic vibration, including a sonotrode.
